# EUROPEAN PATENT APPLICATION

(11) **EP 4 002 143 A1**
(43) Date of publication of application: **25.05.2022**
(21) Application number: 20208755.7
(22) Date of filing: 19.11.2020
(51) Int. Cl.: G06F 16/11

(54) **STORAGE OF FILE SYSTEM ITEMS RELATED TO A VERSIONED SNAPSHOT OF A DIRECTORY-BASED FILE SYSTEM ONTO A KEY-OBJECT STORAGE SYSTEM**

(71) Applicant: Datadobi bv, 3012 Wilsele (BE)
(72) Inventor: Marivoet, Kim, 3360 Lovenjoel (BE)
(74) Representative: IP HILLS NV

(57) **Abstract**

Example embodiments relate to a method for storing (308) file system items related to a versioned snapshot (315) of a directory-based file system onto a key-object storage system comprising: i) generating (303-307), for a respective file system item, a unique key (310) encoding at least path information (312, 314, 316) for determining a path of the file system item on the directory-based file system, and version information (315) identifying the versioned snapshot; and ii) storing (308) the respective file system item as an object referenced by the generated unique key (310) on the key-object storage system.

## Description

### Technical Field

Various example embodiments relate to storage of versioned snapshots of directory-based file system items onto a key-object storage system.

### Background

Object addressable storage, also referred to as key-object storage or shortly object storage, is a data storage architecture that manages data as objects. Such an object comprises a key and a value wherein the key serves as a unique identifier of the value of the object which holds the actual data that is stored. Data can be retrieved from an object storage system by providing the key upon which the associate data, i.e. value, is returned. Because of the key-value storage, an object addressable storage system stores data in an unstructured manner as opposed to for example a directory-based file system which stores file system items in a hierarchical manner. Due to its flexibility and scalability, object addressable storage is provided by various cloud storage providers such as for example by Amazon Web Services S3, and Google Cloud Storage.

An object addressable storage system may also be used for the versioned backup of directory-based file systems. In such case, the file system items are stored within such objects, either by a one-to-one mapping between the file system items and the objects, by storing multiple file system items into on single object, or by storing various components and versions of a file system item into different objects.

An important aspect of versioned backups is to keep a backup catalogue, i.e. to maintain an information source allowing to restore the original file system according to the different snapshots. Besides restoring, such catalogue also allows representing the history of a certain file system item, the history of a certain directory, a view on a certain version of the file system, allows restoring a certain version of a certain file system item, or allows purging older snapshots.

### Summary

The scope of protection sought for various embodiments of the invention is set out by the independent claims.

The embodiments and features described in this specification that do not fall within the scope of the independent claims, if any, are to be interpreted as examples useful for understanding various embodiments of the invention.

Several problems may be identified with backup catalogues when using object storage. First, such a catalogue is a single point of failure for the backup system, i.e. if the catalogue is compromised then the associated data also becomes compromised. Such compromising may for example occur by errors during generation of the catalogue or by malicious attacks. Second, a catalogue may be vendor specific such that the catalogue information can only be accessed by vendor-specific tools. Such vendor lock-in may result in a loss of the backup when there is no longer support for the vendor-specific catalogue and tools.

Amongst others, it is an object of embodiments of the invention to overcome the above identified problems and to provide a solution for storing versioned snapshots onto a key-object storage system

This object is achieved, according to a first example aspect of the present disclosure, by a method for storing file system items related to a versioned snapshot of a directory-based file system onto a key-object storage system comprising:
- generating, for a respective file system item, a unique key encoding at least the following information: path information for determining a path of the file system item on the directory-based file system, and version information identifying the versioned snapshot;
- storing the respective file system item as an object referenced by the generated unique key on the key-object storage system.

In other words, a new version of a file system item is stored as a new single object onto the key-object storage system. The key of the object is encoded such that it embeds information for determining the path of the item and the snapshot version it is related with. As a result, catalogue information associated with the file system item is embedded within the key of its associated object. Therefore, the catalogue information is intrinsically linked with the objects and thus the file system items. As such, a single point of failure of the catalogue is avoided. Further, the readout of keys is determined by the key-object storage system and not by a vendor of the backup solution. In other words, snapshots of the file system can be retrieved based on solely the information within the unique keys. Further, because every version of every individual filesystem item is stored as at least one individual object on the object storage system, granular lifecycle management can be achieved, for example, for making different versions or even objects within a version immutable, or for managing data retention, data access and data deletion.

According to example embodiments, the method according to claim 1 further comprises:
- retrieving a listing of the unique keys on the key-object storage system;
- determining from the listing a catalogue of versioned snapshots of the directory-based file system.

The catalogue itself is thus constructed from a listing command that is issued on the key-object storage system. Such object storage systems are typically very fast in providing such lists without the associated objects. As such, the catalogue can be reconstructed without having to read or retrieve the actual objects.

According to example embodiments the path information is encoded within a certain size according to a maximum allowed length of the unique key. This may for example be performed by including the following information in the unique key:
- a parent identifier characterizing a parent path above the file system item;
- a name of the file system item.

File system items within a directory-based file system have variable path length because of the hierarchical ordering. Keys in an object storage system on the other hand are typically limited to a shorter length. The parent identifier and name of the file system item in the key are independent from the hierarchy in the directory-based file system and thus provide a mapping to the shorter length restriction of the object keys.

Further file system item properties may be included in the key such as for example the depth of the file system item within the directory tree, or for example the type of the file system item, i.e. 'directory', 'file', 'symbolic link' etc.

The parent identifier may be obtained by a hash of the parent path, i.e. a fixed length identifier that is generated from the full parent path. This way, when determining the catalogue, the path of a file system item can be determined by recursively obtaining the names of the file system items in the parent path of a next item until arriving at the top of the directory structure.

According to an embodiment, the generating the unique key further comprises generating a hash-based message authentication code, HMAC, derived from a cryptographic key and the information to be encoded in the unique key, and including the HMAC in the unique key.

This adds further security to the stored snapshots. While the unique keys expose the information for building the catalogue, tampering with the unique keys can be detected by checking the HMAC field. For example, when determining the catalogue, the integrity of the key-object pair can be verified by the HMAC field. Further, this does not only allow detected data that is accidentally or maliciously changed, but can also detect when new data was accidentally or maliciously added to the object-storage system. Since individual filesystem items correspond to at least one individual object, these objects may further be made immutable on the object storage system such that these objects cannot be modified or deleted.

According to an embodiment, the generating of the unique key further comprises generating a prefix based on a hash of the unique key and including the prefix to the beginning of the unique key.

By a hash-based prefix, unique keys that are closely related by their path properties will not appear close to each other when listing them alphabetically. In other words, file system items that are close together within the directory-based file system will be evenly spread over the unique key space. Such file system items may for example be items with the same name, items within the same directory, or different versions of the same item.

This is particular advantageous when retrieving the key listing by parallel listing operations starting from different sequences at the beginning of the unique keys.

According to a second example aspect, the disclosure relates to a controller comprising at least one processor and at least one memory including computer program code, the at least one memory and computer program code configured to, with the at least one processor, cause the controller to perform the method according to the first example aspect.

According to a third example aspect, the disclosure relates to a computer program product comprising computer-executable instructions for causing a device to perform at least the method according to the first example aspect.

According to a fourth example aspect, the disclosure relates to a computer readable storage medium comprising computer-executable instructions for performing the method according to the first example aspect when the program is run on a computer.

### Brief Description of the Drawings

Some example embodiments will now be described with reference to the accompanying drawings.
Fig. 1 shows an example embodiment of a source directory-based storage system and a destination object storage system connected over a communication network;
Fig. 2 shows steps according to an example embodiment for making versioned snapshots of a directory-based file system onto an object storage system;
Fig. 3 shows steps according to an example embodiment for storing a versioned snapshot of a file system item onto an object storage system;
Fig. 4 shows steps according to an example embodiment for generating a catalogue from versioned snapshots stored on an object storage system;
Fig. 5 shows different views extracted from a catalogue containing information on versioned snapshots stored of file system items stored on an object storage system; and
Fig. 6 shows an example embodiment of a suitable computing system for performing various steps according to embodiments of the invention.

### Detailed Description of Embodiment(s)

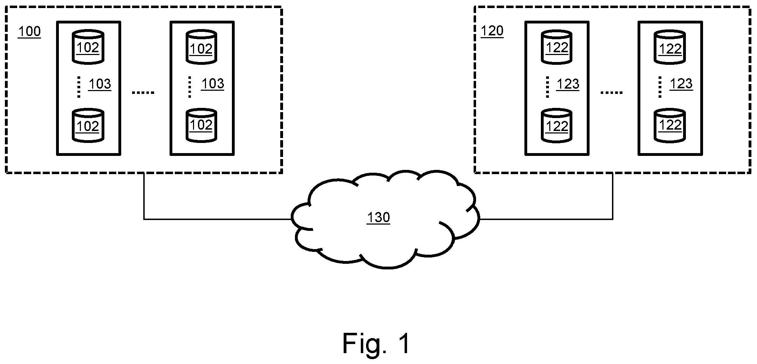

The disclosure relates, amongst others, to the making of a versioned snapshot of file system items residing on a directory-based file system, shortly file system, onto a key-value object addressable storage system for the purpose of making versioned backups of the file system or parts of the file system. Fig. 1 illustrates an exemplary embodiment of a source directory-based file system 100 and a destination key-value object addressable storage system 120. The source storage system 100 may comprise one or more storage servers 103 each housing one or more digital storage means 102. Similarly, the destination system 120 may comprise one or more a storage servers 123 each housing one or more digital storage means 122. The storage servers 103 and 123 may be housed in a same or different data centre inside or outside a company's data network. The storage systems 100 and 120 may offer data storage and access to users, clients and services. Such access may be done over the network 130. The file system data to be backed up from system 100 to system 120 according to described embodiments comprise a set of file system items organized in directories according to the directory-based file system. These file system items may be data files belonging to users or groups, system files used by an operating system or applications files used by and for applications. Both source and destination storage system 100 and 120 may be provided as a cloud-based storage system accessible over the Internet. In such case, the storage systems may be made accessible by cloud storage services providing access by a web service application programming interface (API) or by applications that utilize such API.

Object addressable storage system 120 is a data storage architecture that manages data as objects. Such an object comprises a key and a value wherein the key serves as a unique identifier of the value which holds the actual data that is stored. Data can be retrieved from an object addressable storage system by providing the unique key upon which the associated data, i.e. value, is returned. Because of the key-value storage, an object addressable storage system stores data in a non-hierarchical manner as opposed to for example file system 100.

The object addressable storage system 120 may be a cloud-based object addressable storage system that is interfaceable by a pre-defined application programming interface (API) over a computer network such as the Internet 130. An example of a cloud-based object addressable storage system is Amazon S3 or Amazon Simple Storage Service as offered by Amazon Web Services (AWS) that provides such object addressable storage through a web-based API. Another example is Google Cloud Storage offered by Google providing RESTful object storage on the Google Cloud Platform infrastructure.

A directory-based file system refers to a data storage architecture that manages data as files in a hierarchical addressable structure. To this purpose, a file system also comprises directories or folders allowing grouping of files into separate collections. Both files and directories are referred to as file system items within a file system. A file system may refer to a file system under a Unix-like operating system such as ext2, ext3, ext4, XFS, JFS, btrfs, ZFS, the Apple File System, HFS Plus, UFS, HPFS, or to a file system under a Microsoft Windows like operating system such as FAT, NTFS, exFAT, Live File System and ReFS. A file system may be accessible from the operating system that runs the file system. File system items and listings may also be retrieved remotely over a computer network such as the Internet 130 by using a network file system protocol such as the Network File System (NFS), the Common Internet File System (CIFS), the Server Message Block Protocol (SMB), or the Apple Filing Protocol (AFP).

According to example embodiments, methods and steps are provided for making a versioned backup of a partial or full file system onto an object addressable storage system 120. Such methods may be provided as a computer program product that offers backup functionality, i.e. backup computer programs. Such backup computer program may be executed remotely from the source file system 100 and/or the destination object addressable storage system 120. Commands on both the source file system and/or the destination object addressable storage system may then be sent over a computer network such as the Internet 130 to the respective storage systems 100, 120.

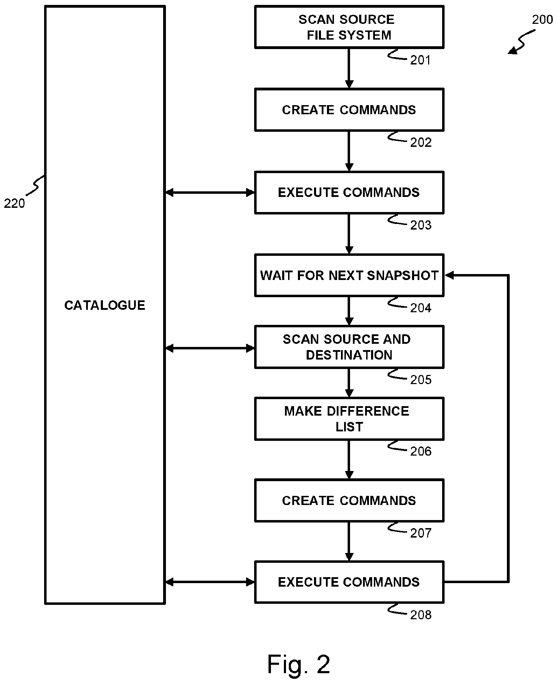

Fig. 2 illustrates steps 200 performed by a backup computer program for making versioned backups from the source file system 100 to the destination object addressable storage system 120 according to an example embodiment. In a first step 201, the source file system is scanned for file system items. In a next step 202, the list of file system items is then translated into a list of commands for the creation of objects associated with the file system items on the destination object addressable storage. Thereupon, in step 203, the commands are executed accordingly on the remote object addressable storage system 120. Advantageously, the changes to the destination storage system 120 are recorded into a catalogue 220. Such a catalogue may correspond to a text file or database wherein the status is recorded of each version of a file system item on the destination system 120. After step 203, an initial backup of the file system has been made and the method proceeds to a waiting step 204. The method now waits for a trigger to create a new versioned backup of the source file system 100. Such triggers may be provided periodically according to a predetermined backup interval and/or irregularly upon the occurrence of a certain event, e.g. by a user action. Upon receiving such trigger, the method proceeds to step 205 and scans both the source file system for file system items and the destination storage system to retrieve a representation of the file system after the previous versioned backup. Advantageously, the status of the file system items stored on the destination system 120 is retrieved from the catalogue 220 to reduce excessive listing commands. Based on the differences between these lists, a listing of the differences between the new version of the file system items and the previous version of the file system items is created in step 206. Based on this listing, in a next step 207, a list of commands is again generated for creating new objects on the object storage system that represent the new snapshot version of the file system, i.e. for creating new or updated file system items. These commands are then executed according to step 208 upon which the method returns to the waiting step 204. Upon or during the execution step 208, the catalogue 220 is updated, i.e. changes to the file system items are recorded into the catalogue.

Different snapshots and thus versions of file system items are stored as separate key-value objects on the object addressable storage system 120. The file system item itself is stored as the value of the object while the key serves as a unique identifier for retrieving the stored object. This key is created when creating the commands under step 203 and 207. The unique keys are further constructed such that catalogue 220 can be recreated from these keys only. This may for example be done by encoding the following information into the keys: i) the path of the file system items on the source file system; ii) the version of the file system items referring to the versioned snapshot during which the respective objects were created; and iii) a type of the associated file system item, The type may then comprise an indication that: i) the associated file system items is a directory or similar to a directory such as a symbolic link; ii) the associated file system item is a file; or iii) the associated file system item is deleted during the present execution of the snapshot. The value of the key-value pair may then comprise the associated file system item. For a file type, the value comprises the actual binary file, for a directory type, the value may comprise a listing of the content of the directory. As the information is encoded into the generated keys, this information may also be retrieved from the keys.

According to example embodiments, different information is encoded in the key such that catalogue 220 may be recreated from the information encoded in these keys. To this end, the keys are generated such that the following information is decodable from the keys: the path of the parent directory containing the item, the name of the item, the item type, the make time or *mtime* of the item, the access time or *atime* of the item, the change time or *ctime* of the item, and the size of the item.

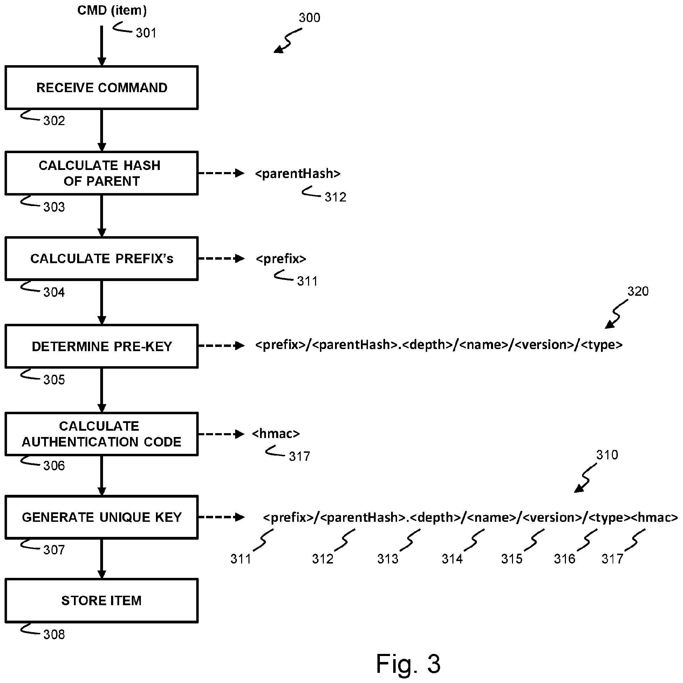

Fig. 3 illustrates steps 300 according to an example embodiment performed for creating a unique key 310 a file system item with creating a snapshot, e.g. during steps 203 and 208. In step 302, a command 301 is received for execution onto object storage system 120. The command 301 may relate to the creation, update or deletion of a certain file system item. By this command, a certain key-value pair has to be created. The file system item may typically be identified onto the file system by a parent path, file name and file type. First, according to step 303, a hash is calculated from the parent path, further referred to as parent hash 312. A parent hash is to be understood as a fixed size digest of the parent path. Due to the hashing operation, the parent path can be identified by the hash but cannot by derived directly from it. Then, according to step 304, a prefix 311 may be calculated. Prefix 311 may correspond to a fixed length character string. Then, according to next step 305, a unique pre-key 320 is derived which uniquely identifies the file system item and its version. According to the embodiment pre-key 320 is composed of prefix 311, parent hash 312, the depth value 313, i.e. the directory depth of the file system within the source directory based file system, the name 314 of the file system item, the version 315 of the snapshot, and the type 316 of the item. The so-obtained pre-key 320 is then used as input for next step 306 wherein a so-called authentication code 317 is calculated from the pre-key. By the authentication code 317, the pre-key 320 can be verified afterwards for its authenticity. Preferably, authentication code 317 is a message authentication code, MAC, obtained by generating the authentication key by a secret cryptographic key. More preferably, hash 317 is a key-hashed message authentication code or HMAC. Then, according to step 307, the unique key 310 is generated by adding the generated hash 317 to the pre-key 320. This unique key 310 is then used as the key for storing the file system item onto the object storage system 120 according to step 308. By the authentication code 317 a malicious or accidental change of the key 310 can be detected. This is particular advantageous when constructing a catalogue from all the keys on the object storage system 120. A malicious or accidental change may also be prevented by making the objects on the object storage system 120 immutable, i.e. making it impossible to delete or modify them. A further advantage of the authentication code 317 is that it also allows detecting when a new key-object pair was maliciously added to the object storage system 120. Such malicious addition of an object could modify the perceived content of a certain filesystem version. Such addition could also adversely impact garbage protection processes which ultimately can lead to data loss.

By the keys 310 generated by steps 300, it is possible to derive catalogue information of the file system items, i.e. it is possible to derive the full path and version of a file system item even if the available key length is shorter than the maximum pathname of a file system item. As such, when a catalogue 220 becomes corrupt, compromised or is lost, it can be regenerated by retrieving the keys from object storage system 120 and decoding the catalogue information therefrom. It will be understood that further information may be encoded in the key 310 or that the prefix 311, depth 313 and hash 317 may be omitted.

A further detailed embodiment of a possible key structure will now be described wherein the common structure of the key is represented as follows:

```
   <pre1>/<vstoreid>/<pre2>/<parentHash>_<depth>/<name>[/<version>]/<type
   >[.md|.ads|.na][.<objectTypeSpecificPayload>][<.fullHash>].<keyVersion>.<h
   mac>
```

And wherein
fields of the key are indicated between '<' and '>' symbols;
fields are separated from one another in the key by a backslash '/', a dot '.' or underscore '_';
optional fields are indicated between square brackets '[' and ']'; and different possibilities for a value are separated by a vertical separator '|'.

The key contains 4 hexadecimal prefix characters divided over a first field *<pre1>* of 3 characters and a second field *<pre2>* of 1 character. One advantage of the prefix is sharding, i.e. the horizontal distribution of the data objects on the storage system 120, e.g. over different nodes or servers 123 and/or over different disks 122. The combination of prefix fields *<pre1>* and *<pre2>* provides 65536 different shards. Another advantage is that the prefixes enhance parallelism. More particular, a listing operation to list all object keys may be split up in 4096 parallel requests when only using *<pre1>* and 65536 parallel requests when using both *<pre1>* and *<pre2>.* As the objects will be distributed uniformly across all prefixes, also the requests will be more or less equal in size.

*<pre1>* and *<pre2>* may further be based on the parent hash *<parentHash>.* This way, the keys belonging to a certain parent directory may be listed by a request based on the prefix. Further, the parent hash may be further combined with the full hash *<.fullHash>.* This way, it is avoided that items are not evenly distributed over all possible prefixes. This combination may for example be performed as follows: the first two characters of the prefix *<pre1>* are based on the parent hash, the third character of *<pre1>* is based on the full hash *<.fullHash>,* and *<pre2>* is again based on the parent hash <*parentHash*>*.* As a result, directories will be distributed across 256 times 16 different prefixes, and the content of each directory will be further distributed across 16 different prefixes.

Parent hash *<parentHash>* is obtained by a hashing function, e.g. a SHA1 hashing function, of the parent path of the file system item. For example, if the item has a path 'a/b/c/d', then the parent hash is calculated based on the '/a/b/c' part. For a root item with path <empty> the hash is the hash of the empty path.

The *<.fullHash>* field is only used for directories, i.e when the *<type>* field indicates that the underlying file system item is a directory. The *<fullHash>* is obtained by a hashing function, e.g. a SHA1 hashing function, of the full path of the directory. For example, if the directory has a path 'a/b/c/d', then the full hash is calculated based this path.

The *<depth>* part of the key corresponds to the directory depth of the file system item. For example, for an item with path '/a/b/c/d' the depth is 4, for the root item '/' the depth is 0.

The *<name>* part is a character representation, e.g. a base64 encoded representation, of the name of the file system item. By using a base64 encoded representation possible issues with dots and other incompatible characters may be avoided.

The *<version>* part of the key is a number referring to the snapshot version.

The *<type>* part of the key is a character indicating the type of the object and thus the underlying file system item. The following types may for example be identified by the *<type>* field:
- the underlying file system item is a file', e.g. represented by 'f';
- the underlying file system item is a directory, e.g. represented by 'd';
- the underlying file system item is a symbolic link (symlink), e.g. represented by's';
- the underlying file system item was deleted during snapshot *<version>,* e.g. represented by 'x';
- the object contains a listing of the content of a directory, e.g. represented by 'i'.

Additionally, one of optional fields *'.md',* '.ads', and '.na' may be added. The '.*md*' optional field indicates that the object stores additional information associated with the file system item, for example different owner permissions as available under different file systems. Such additional information is typically referred to as metadata in the context of file systems. The '.*ads'* option is added for indicating an alternate data streams, ADS, object. ADS is a specific property of the NTFS file system that allows storing additional files within a single file name as so-called alternate data streams. The '.*na*' optional field indicates that the object is a named attributes object, a similar property as ADS in the Network File System (NFS) Version 4 Protocol.

The optional *<objectTypeSpecificPayload>* field of the key may contain additional information on the file system item apart from its normal file system properties such as its type, name, path and metadata information. This field may for example include a hash value of the file system item, the last modification time or *mtime* of the file system item, the last access time or *atime* of the file system item and the change time or *ctime* of the file system item.

The *<keyVersion>* identifies the used key structure. This allows modifying the common key structure at a later time while maintaining backwards compatibility.

The part of the key structure without the *<hmac>* field contains the fields of the pre-key 320 as described with reference to Fig. 3. The *<hmac>* corresponds to the <hmac> field 317 of Fig. 3, i.e. *<hmac>* is a message authentication code, MAC, obtained by generating the authentication key by a secret cryptographic key from the pre-key, i.e. all preceding fields of the key structure. More preferably, *<hmac>* is a key-hashed message authentication code or HMAC.

A single file system item may have different key-objects in the storage system 120, even for the same version. For example, a file will have a file type key in the form:

```
     <pre1>/<vstoreid>/<pre2>/<parentHash>_<depth>/<name>/<version>/f.<ke
     yVersion>.<hmac>,
```

and a metadata type key in the form

```
     <prefix>/<vstoreid>/<prefix>/<parentHash>_<depth>/<name>/<version>/<ty
     pe>.md.<objectTypeSpecificPayload>[.<fullHash>].<keyVersion>.<hmac>
```

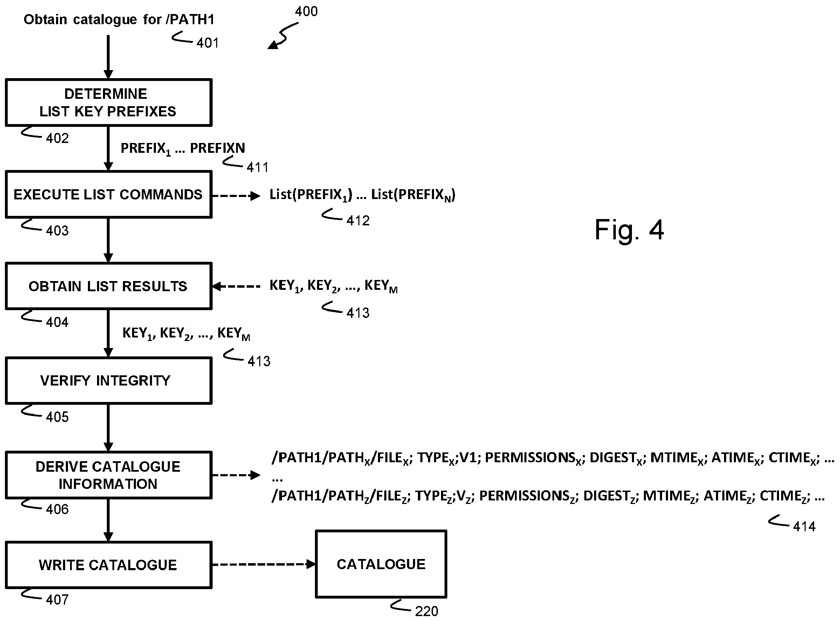

Fig. 4 illustrates steps 400 according to an example embodiment performed to generate catalogue 220 from information encoded in the unique keys 310 as stored on the object storage 120. Catalogue 220 may be generated or regenerated from the keys for various reasons, for example because catalogue 220 has become corrupt either maliciously or not. Steps 400 start with an instruction 401 to generate catalogue 220. The instruction 401 may specify to generate the complete catalogue 220, i.e. from the root directory of the directory-based file system, or from a certain path PATH1, i.e. a subdirectory, onwards. According to a next step 402, the key prefixes 411 of the keys associated with the file items within the path PATH1 are determined. When the full file system is to be listed, different starting prefixes may be determined for launching parallel listing commands. When only a PATH1 is to be listed, different prefixes 411 associated with file system items within PATH1 may be derived for parallel listing commands. According to next step 403, object listing commands 412 are executed onto storage system 120, i.e. to obtain the keys that have the specified prefix 411. In response, the respective key listings 413 are obtained according to step 404. Optionally, the integrity of the keys 413 may be verified according to step 405. This may be done by calculating <hmac> 317 from the pre-key part 320 of the key based on a cryptographic secret key. According to next step 406, the catalogue information 414 is derived from the obtained keys 413. Catalogue information 414 contains the path of the file system item, the name of the file system item, the type of the file system item and the snapshot version of the file system item. The catalogue information 414 may contain further information dependent on the further information encoded in the key such as the digest of the data, the permissions, the latest access time, the latest modification time, and the latest change time. As a single key does not contain the full path of the item, the path can be derived by combining the parent hash field 312 in the key with other parent hashes 312 and names 314 from parent file system items until arriving at the highest path PATH1 as specified in instruction 401. According to next step 407, the so-obtained catalogue information 414 is then written into catalogue 220.

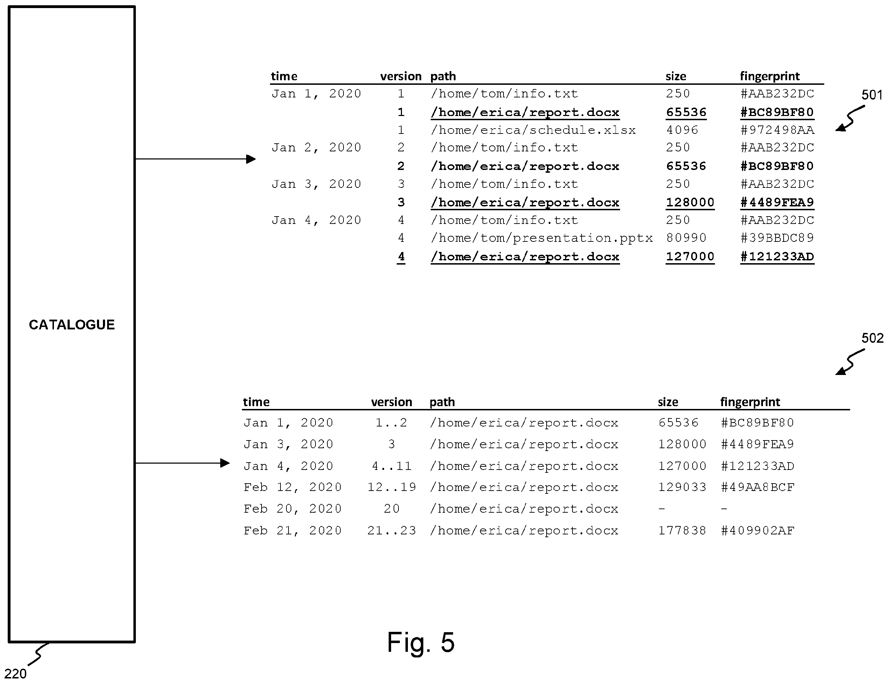

Fig. 5 illustrates different example views 501, 502 that may be extracted from catalogue 220 as for example obtained by steps 400. First view 501 shows a file system view on a '/home' subdirectory starting from January 1 2020. The 'time' column displays the date on which a snapshot was created, 'version' column displays the version number corresponding to this date, the 'path' column displays the name, path and type of a certain file system item, the 'size' column displays the file item size and the 'fingerprint' column shows the digest or hash of the data of the file system item. In view 501, the file 'report.docx' is tracked throughout the different snapshot versions as indicated in bold. When this file is underlined, then its data has been changed as reflected by the fingerprint column.

Second view 502 shows a historical view of a specific file system item, i.e. the file 'report.docx'. The 'time' column shows the date on which a certain snapshot was first available. The 'version' column shows the snapshot versions during which the item remained unchanged. The 'path' column shows the full path and type of the item. The 'size' column displays the file item size and the 'fingerprint' column shows the digest or hash of the data associated with the file system item.

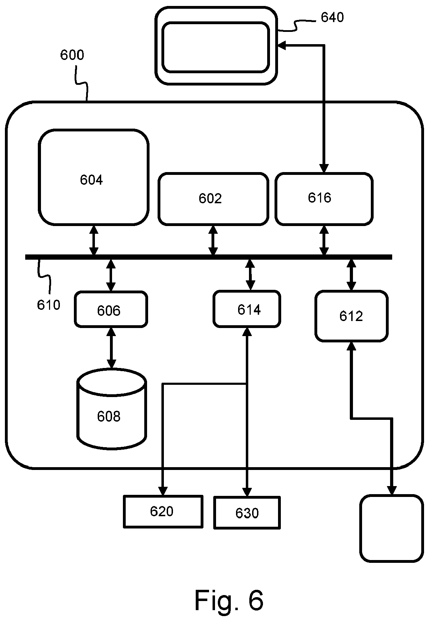

Fig. 6 shows a suitable computing system 600 enabling to implement the steps according to the above described embodiments. Computing system 600 may in general be formed as a suitable general-purpose computer and comprise a bus 610, a processor 602, a local memory 604, one or more optional input interfaces 614, one or more optional output interfaces 616, a communication interface 612, a storage element interface 606, and one or more storage elements 608. Bus 610 may comprise one or more conductors that permit communication among the components of the computing system 600. Processor 602 may include any type of conventional processor or microprocessor that interprets and executes programming instructions. Local memory 604 may include a random-access memory (RAM) or another type of dynamic storage device that stores information and instructions for execution by processor 602 and/or a read only memory (ROM) or another type of static storage device that stores static information and instructions for use by processor 602. Input interface 614 may comprise one or more conventional mechanisms that permit an operator or user to input information to the computing device 600, such as a keyboard 620, a mouse 630, a pen, voice recognition and/or biometric mechanisms, a camera, etc. Output interface 616 may comprise one or more conventional mechanisms that output information to the operator or user, such as a display 640, etc. Communication interface 612 may comprise any transceiver-like mechanism such as for example one or more Ethernet interfaces that enables computing system 600 to communicate with other devices and/or systems, for example with other computing devices 681, 682, 683. The communication interface 612 of computing system 600 may be connected to such another computing system by means of a local area network (LAN) or a wide area network (WAN) such as for example the internet. Storage element interface 606 may comprise a storage interface such as for example a Serial Advanced Technology Attachment (SATA) interface or a Small Computer System Interface (SCSI) for connecting bus 610 to one or more storage elements 608, such as one or more local disks, for example SATA disk drives, and control the reading and writing of data to and/or from these storage elements 608. Although the storage element(s) 608 above is/are described as a local disk, in general any other suitable computer-readable media such as a removable magnetic disk, optical storage media such as a CD or DVD, -ROM disk, solid state drives, flash memory cards, ... could be used.

As used in this application, the term "circuitry" may refer to one or more or all of the following:
(a) hardware-only circuit implementations such as implementations in only analog and/or digital circuitry and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and/or processor(s), such as microprocessor(s) or a portion of a microprocessor(s), that requires software (e.g. firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in a server, a cellular network device, or other computing or network device.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A method for storing (308) file system items related to a versioned snapshot (315) of a directory-based file system onto a key-object storage system (120) comprising:
- generating (303-307), for a respective file system item, a unique key (310) encoding at least the following:
∘ path information (312, 314, 316) for determining a path of the file system item on the directory-based file system;
∘ version information (315) identifying the versioned snapshot;
- storing (308) the respective file system item as an object referenced by the generated unique key (310) on the key-object storage system.

2. The method according to claim 1 further comprising:
- retrieving (403, 404) a listing (413) of the unique keys on the key-object storage system;
- determining (406, 407) from the listing a catalogue (220) of versioned snapshots of the directory-based file system.

3. The method according to claim 1 or 2 wherein the path information is encoded within a certain size according to a maximum allowed length of the unique key.

4. The method according to claim 3 wherein the path information encodes:
- a parent identifier (312) characterizing a parent path above the file system item;
- a name (314) of the file system item.

5. The method according to claim 4 wherein the parent identifier (312) is based on a hash of the parent path.

6. The method according to claims 4 or 5, and to claim 2 wherein the determining the catalogue comprises determining the path of the respective file system item based on the name and the parent identifier.

7. The method according to any one of the preceding claims wherein the generating the unique key further comprises generating (306) a hash-based message authentication code, HMAC, (317) derived from a cryptographic key and the information (320) to be encoded in the unique key , and including (307) the HMAC in the unique key.

8. The method according to claim 7 and claim 2 wherein the determining comprises verifying (405) the integrity of unique key.

9. The method according to any one of the preceding claims wherein the generating the unique key further comprises generating (304) a prefix (311) based on a hash of the unique key and including the prefix in the beginning of the unique key (310).

10. The method according to claim 9 and claim 2 wherein the retrieving (403-404) is performed by parallel listing operations (412) starting from different sequences (411) at the beginning of the unique keys.

11. A controller (600) comprising at least one processor (602) and at least one memory (604) including computer program code, the at least one memory and computer program code configured to, with the at least one processor, cause the controller to perform the method according to any one of claims 1 to 10.

12. A computer program product comprising computer-executable instructions for causing a device (600) to perform at least the method according to any one of claims 1 to 10.

13. A computer readable storage medium comprising computer-executable instructions for performing the method according to any one of claims 1 to 10 when the program is run on a computer.
